Europäisches Patentamt

European Patent Office

Office européen des brevets

(19)

(11) Numéro de publication : **0 351 776 B1**

(12) **FASCICULE DE BREVET EUROPEEN**

(45) Date de publication du fascicule du brevet :
16.09.92 Bulletin 92/38

(51) Int. Cl.⁵ : **G01L 19/08**

(21) Numéro de dépôt : **89113148.4**

(22) Date de dépôt : **18.07.89**

(54) **Manomètre comportant un cadran circulaire et une aiguille à axe central.**

(30) Priorité : **20.07.88 FR 8809807**

(43) Date de publication de la demande :
**24.01.90 Bulletin 90/04**

(45) Mention de la délivrance du brevet :
**16.09.92 Bulletin 92/38**

(84) Etats contractants désignés :
**AT BE CH DE ES FR GB GR IT LI LU NL SE**

(56) Documents cités :
**FR-A- 1 585 436**

(73) Titulaire : **GEC ALSTHOM SA**
**38, avenue Kléber**
**F-75116 Paris (FR)**

(72) Inventeur : **Bues, Michel**
**5 Allée de Sévigné Jonage**
**F-69330 Meyzieu (FR)**
Inventeur : **Sauvat, Roger**
**1 rue Pierre Louis Bernaix**
**F-69100 Villeurbanne (FR)**
Inventeur : **Zacar, Alain**
**Chemin du Bois Comtal Millery**
**F-69390 Vernaison (FR)**

(74) Mandataire : **Weinmiller, Jürgen et al**
**Lennéstrasse 9 Postfach 24**
**W-8133 Feldafing (DE)**

EP 0 351 776 B1

## Description

La présente invention concerne un manomètre comportant un cadran circulaire et une aiguille à axe central, ce manomètre permettant notamment de vérifier le bon remplissage d'une enceinte contenant du gaz.

Dans une enceinte remplie d'un gaz telle que, par exemple, un disjoncteur à hexafluorure de soufre, la masse de gaz doit être maintenue constante. Le remplissage de l'enceinte se fait à une pression déterminée en fonction de la température du gaz, elle-même variant en fonction de la température extérieure.

Pour vérifier si des fuites apparaissent, on mesure la pression de ce gaz, mais comme la température, au moment de la vérification, n'est pas obligatoirement la même qu'au moment du remplissage, il faut tenir compte de cette variation de température.

D'une manière connue, la compensation de cette variation de température s'effectue, après avoir mesuré la pression effective du gaz à l'aide d'un manomètre classique, à l'aide de diagrammes de conversion qui donnent la pression que l'on obtiendrait si la température effective était égale à la température extérieure au moment du remplissage, cette pression étant appelée "pression compensée". Mais l'utilisation de diagrammes de conversion entraîne inévitablement des risques d'erreur de lecture.

Pour supprimer ces risques, on peut utiliser des manomètres compensés en température, mais ces manomètres sont d'un coût important.

La présente invention a pour but de supprimer l'utilisation des diagrammes de conversion en traçant, sur le cadran d'un manomètre et à partir des diagrammes de conversion, des lignes courbes délimitant des zones de pressions indiquant l'une une pression normale et les autres une pression anormale, et en matérialisant une échelle de température qui permet de tenir compte de la température effective au moment de la vérification.

La présente invention a pour objet un manomètre comportant un cadran circulaire et une aiguille à axe central, caractérisé en ce que le cadran comporte des lignes courbes ,délimitant des zones de pressions indiquant l'une une pression normale de remplissage d'une enceinte et les autres une pression'anormale de remplissage de ladite enceinte, ce manomètre comportant en outre une échelle de température s'étendant radialement par rapport au centre du cadran, le point de repérage de la température effective le long de l'aiguille Indiquant alors dans quelle zone se trouve la pression.

Selon un premier mode de réalisation, le cadran comporte des cercles concentriques représentant une échelle de température.

Selon un deuxième mode de réalisation, l'aiguille comporte un thermomètre indiquant la température effective.

Il est décrit ci-après, à titre d'exemple et en référence au dessin annexé, les deux modes de réalisation du manomètre selon l'invention.

La figure 1 représente un diagramme de conversion utilisé dans l'art antérieur.

La figure 2 représente le premier mode de réalisation.

La figure 3 représente le deuxième mode de réalisation.

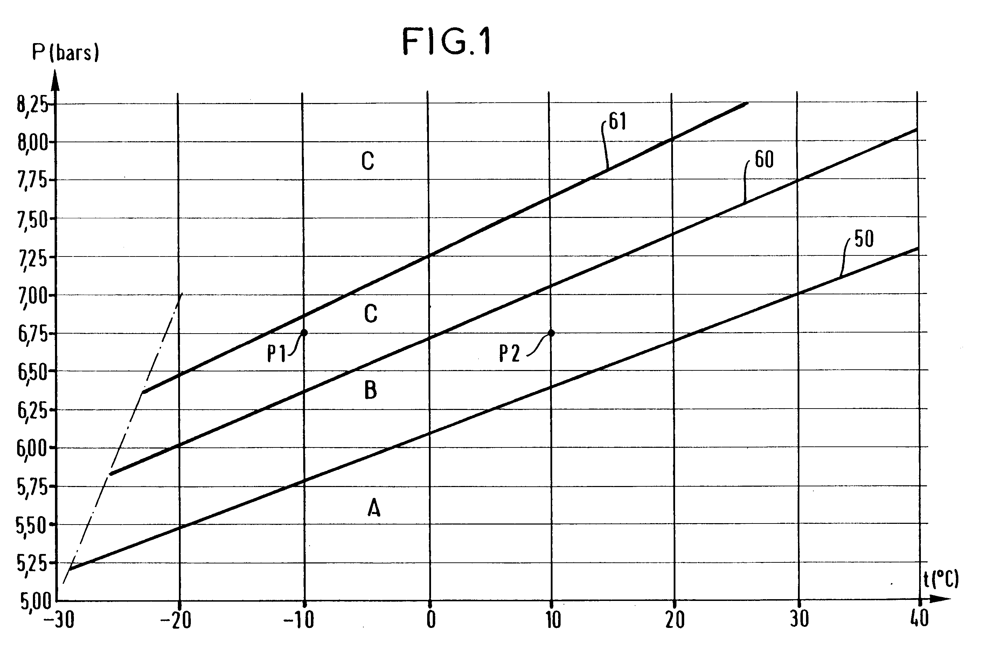

Dans la figure 1, le diagramme de conversion comporte trois lignes 50, 60, 61, les lignes 50 et 60 séparant respectivement les zones A et B, B et C.

La zone A représente la zone limite inférieure de garantie des performances de l'appareil.

La zone B représente la zone où un complément de remplissage est nécessaire.

La zone C représente la zone où la pression est normale.

La zone D est au-delà de la limite supérieure de garantie de l'appareil.

La ligne 61 représente la pression de remplissage en fonction de la température.

La pression de remplissage doit être de 8 bars à 20° C ou, par exemple, de 7,25 bars à 10° C.

Au moment de la vérification, si la pression mesurée avec un manomètre classique est de 6,75 bars à - 10° C (point P1), le diagramme de conversion de la figure 1 indique que ce point P1 est dans la zone C et donc que la pression est normale. Si la pression est de 6,75 bars à + 10° C (point P2) ce point P2 est dans la zone B et dans ce cas un complément de remplissage est nécessaire.

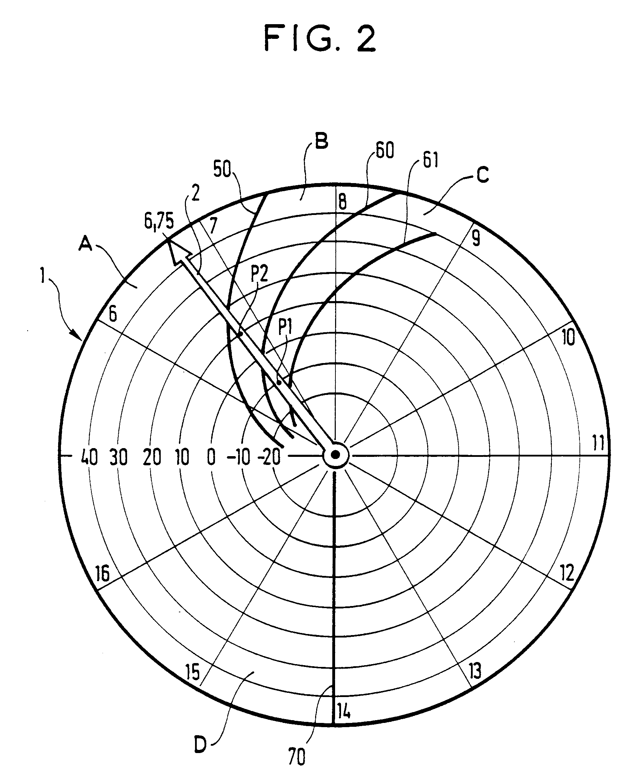

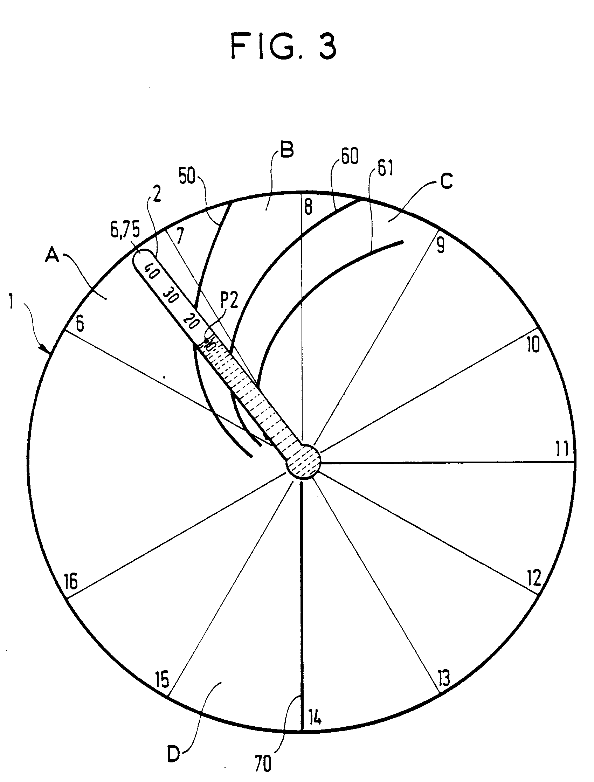

Dans les figures 2 et 3 représentant les deux modes de réalisation du manomètre selon l'invention, le diagramme est directement intégré sur le cadran 1, de sorte que les lignes 50, 60, 61 apparaissent sur ces figures, ainsi que les zones A, B et C.

Une autre ligne apparait, la ligne 70, qui est une droite correspondant à 14 bars quelle que soit la température.

Cette pression de 14 bars correspond à la pression maximum que support l'appareil.

La zone D représente donc la zone où il y a risque d'éclatement.

Dans la figure 2, le cadran circulaire comporte une échelle de température se présentant sous la forme de cercles concentriques allant de -20 à +40 ° C.

Une vérification de la pression s'effectue donc de la manière suivante :

Après avoir branché le manomètre, l'aiguille 2 va se stabiliser dans un certain position et, pour savoir si la pression compensée est normale, il suffira, connaissant la température effective, de repérer le long de l'aiguille le cercle correspondant à cette température effective, ou de faire une interpolation entre deux cercles. Si le point de repérage de la température effective le long de l'aiguille est dans la zone C, la pression est normale, aucune intervention n'est donc nécessaire. Si le point de repérage et dans la zone B, un complément de remplissage est nécessaire. Si le point de repérage est dans la zone A ou dans la zone D, une intervention est nécessaire. Dans la figure 3, le cadran ne comporte plus d'indication de température sous forme de cercles concentriques, mais l'aiguille comporte directement un thermomètre, de sorte que le point de repérage est déterminé directement par la limite du liquide du thermomètre s'il s'agit d'un thermomètre à mercure,

ou par un code couleur s'il s'agit d'un thermomètre à affichage couleur.

Ce thermomètre intégré évite de faire des interpolations entre deux cercles de température.

Dans les deux modes de réalisation des figures 2 et 3, le cadran comporte des repères de pression allant de 6 à 16 bars qui permettant de connaître, lors de la vérification, la pression effective, mais ces repères ne sont pas indispensables car c'est la pression compensée que l'on souhaite connaître.

Le cadran peut aussi comporter la ligne 61 qui permet de ne pas utiliser un manomètre classique lors du remplissage. Il suffirait, pour l'opérateur, d'amener l'aiguille au point d'intersection de cette ligne 61 et du cercle de température, ou du niveau, représentant la température extérieure.

## Revendications

1/ Manomètre comportant un cadran (1) circulaire et une aiguille (2) à axe central, caractérisé en ce que le cadran comporte des lignes courbes (50, 60, 70) délimitant des zones de pressions (A, B, C, D) indiquant l'une (C) une pression normale de remplissage d'une enceinte et les autres une pression anormale de remplissage de ladite enceinte, ce manomètre comportant en outre une échelle de température s'étendant radialement par rapport au centre du cadran, le point de repérage de la température effective le long de l'aiguille indiquant alors dans quelle zone se trouve la pression.

2/ Manomètre selon la revendication 1, caractérisé en ce que le cadran comporte des cercles concentriques représentant une échelle de température, le point de repérage indiquant la pression étant obtenu le long de l'aiguille et au niveau du cercle correspondant à la température effective, ou au niveau d'une interpolation entre deux cercles.

3/ Manomètre selon la revendication 1, caractérisé en ce que l'aiguille comporte un thermomètre indiquant la température effective, le point de repérage indiquant la pression étant obtenu directement sur le thermomètre.

4/ Manomètre selon la revendication 3, caractérisé par le fait que le thermomètre est un thermomètre à niveau de liquide.

5/ Manomètre selon la revendication 3, caractérisé par le fait que le thermomètre est un thermomètre à secteur changeant de couleur.

## Patentansprüche

1. Druckmesser mit einer Kreisskala (1) und einer Nadel (2) mit zentraler Achse, dadurch gekennzeichnet, daß die Skala Kurvenlinien (50, 60, 70) aufweist, die Druckzonen (A, B, C, D) begrenzen, von denen eine (C) einen normalen Fülldruck eines Raums und die anderen einen anormalen Fülldruck dieses Raums angeben, wobei dieser Druckmesser weiter eine Temperaturskala aufweist, die sich radial in Bezug auf das Zentrum der Kreisskala erstreckt, wobei der Bezugspunkt der tatsächlichen Temperatur entlang der Nadel dann angibt, in welcher Zone sich der Druck befindet.

2. Druckmesser nach Anspruch 1, dadurch gekennzeichnet, daß die Kreisskala konzentrische Kreise aufweist, die eine Temperaturskala darstellen, wobei der den Druck angebende Bezugspunkt entlang der Nadel und in Höhe des der tatsächlichen Temperatur entsprechenden Kreises oder in Höhe einer Interpolation zwischen zwei Kreisen erhalten wird.

3. Druckmesser nach Anspruch 1, dadurch gekennzeichnet, daß die Nadel ein Thermometer aufweist, das die tatsächliche Temperatur angibt, wobei der den Druck angebende Bezugspunkt direkt auf dem Thermometer erhalten wird.

4. Druckmesser nach Anspruch 3, dadurch gekennzeichnet, daß das Thermometer ein Thermometer mit Flüssigkeitspegel ist.

5. Druckmesser nach Anspruch 3, dadurch gekennzeichnet, daß das Thermometer ein Thermometer mit farbändernden Sektoren ist.

## Claims

1. Manometer comprising a circular dial (1) and a central axis indicator (2) characterised in that the dial comprises curved lines (50, 60, 70) delimiting pressure areas (A, B, C, D) one (C) indicating a normal filling pressure of an enclosure and the other an abnormal filling pressure of said enclosure and a temperature scale extending radially relative to the centre of the dial, the point along the indicator identifying the actual temperature indicating the area in which the pressure is situated.

2. Manometer according to claim 1 characterised in that the dial comprises concentric circles representing a temperature scale and the point indicating the pressure is on the indicator and at the circle representing the actual temperature or at a point interpolated between two circles.

3. Manometer according to claim 1 characterised in that the indicator comprises a thermometer indicating the actual temperature and the point indicating the pressure is shown directly by the thermometer.

4. Manometer according to claim 3 characterised in that the thermometer is a liquid level thermometer.

5. Manometer according to claim 3 characterised in that the thermometer is a colour changing sector thermometer.

# FIG.1

P (bars)

8,25
8,00
7,75
7,50
7,25
7,00
6,75
6,50
6,25
6,00
5,75
5,50
5,25
5,00

C

C

B

A

P1

P2

61

60

50

-30   -20   -10   0   10   20   30   40

t (°C)

EP 0 351 776 B1

# FIG. 2

# FIG. 3